# EUROPÄISCHE PATENTSCHRIFT

(11) **EP 2 233 818 B1**
(45) Veröffentlichungstag und Bekanntmachung des Hinweises auf die Patenterteilung: **26.07.2017**
(21) Anmeldenummer: 10001382.0
(22) Anmeldetag: 11.02.2010
(51) Int. Cl.: F16P 3/14

(54) **Sicherheitssystem**
Safety system
Système de sécurité

(30) Priorität: 24.03.2009 DE 102009014574
(43) Veröffentlichungstag der Anmeldung: 29.09.2010
(73) Patentinhaber: Leuze electronic GmbH + Co. KG, 73277 Owen/Teck (DE)
(72) Erfinder: Lohmann, Lutz Dr., 82140 Olching (DE)
(74) Vertreter: Ruckh, Rainer Gerhard

(56) Entgegenhaltungen:
- EP-A2- 0 793 208
- WO-A1-86/06816
- CA-A1- 2 334 772
- DE-A1-102007 004 233
- US-A1- 2003 117 023

## Beschreibung

Die Erfindung betrifft ein Sicherheitssystem.

Sicherheitssysteme der in Rede stehenden Art weisen einen Sicherheitssensor auf, mit welchem Objekte innerhalb eines Überwachungsbereichs erfasst werden. Der Überwachungsbereich bildet dabei einen abzusichernden Gefahrenbereich an einer Maschine, Anlage oder dergleichen. Zu Zwecken des Personenschutzes erfolgt die Überwachung mit dem Sicherheitssensor derart, dass dann, wenn mit dem Sicherheitssensor das Eindringen einer Person in den Überwachungsbereich registriert wird, dieser Sicherheitssensor ein Ausgangssignal generiert, welches ein Abschalten der Maschine oder Anlage bewirkt. In den Gefahrenbereich dringen jedoch nicht nur Personen oder allgemein sicherheitskritische Objekte in den Überwachungsbereich ein. Vielmehr müssen beispielsweise Werkstücke, die mit der Maschine oder Anlage zur Bearbeitung zugeführt oder von dieser entfernt werden, bestimmungsgemäß in den Überwachungsbereich geführt werden. Ein Eindringen derartiger nichtsicherheitskritischer Objekte in den Überwachungsbereich soll nicht zu einem Abschalten der Maschine oder Anlage führen, da von diesen keine Gefahren ausgehen.

Ein derartiger Sicherheitssensor ist aus der DE 102 24 031 A1 bekannt. Der dort beschriebene Sicherheitssensor ist von einem redundanten Kamerasystem bestehend aus zwei Kameras gebildet, wobei die von den Kameras generierten Bildinformationen in einer Auswerteeinheit, bestehend aus zwei Rechnereinheiten, ausgewertet werden. Mit diesem Kamerasystem wird als Überwachungsbereich ein Gefahrenbereich an ein Arbeitsmittel wie einem Arbeitsroboter überwacht.

Mit dem Kamerasystem können sicherheitskritische Objekte, wie zum Beispiel Hände oder Finger einer Person, von nichtsicherheitskritischen Objekten unterschieden werden. Diese Unterscheidung erfolgt durch die in den Rechnereinheiten durchgeführte Bildmerkmalsanalyse. Alternativ kann zur Beurteilung, ob sich ein sicherheitskritisches Objekt in der Schutzzone befindet, auch zusätzlich ein Vergleich der aktuellen Bildinformationen mit vorgegebenen Referenzbildern durchgeführt werden. Ein Abschalten des Arbeitsmittels über das Kamerasystem erfolgt nur dann, wenn ein sicherheitskritisches Objekt in eine Schutzzone innerhalb des Erfassungsbereichs eindringt.

Nachteilig hierbei ist, dass die Bildmerkmalsanalyse zur Unterscheidung von sicherheitskritischen Objekten und nichtsicherheitskritischen Objekten relativ aufwändig ist und dennoch keine völlig sichere Unterscheidung vom sicherheitskritischen Objekten und nichtsicherheitskritischen Objekten ermöglicht. Die US 2003/0117023 A1 betrifft ein Überwachungssystem zum Erfassen von in einem Überwachungsbereich eindringenden Objekten. Das Überwachungssystem umfasst einen Sensor, der ein spezifisches Unterscheidungsmerkmal eines Objekts erfassen kann, wobei bei Eindringen des Objekts mit dem Unterscheidungsmerkmal in den Überwachungsbereich ein Korrektursignal für eine Maschine generiert wird.

Aus der WO 86/06816 A1 ist ein Sicherungssystem bekannt, das mit einem fluoreszierenden Sicherheitshandschuh arbeitet, der mit einem Sensor detektierbar ist.

Die EP 0 793 208 A2 betrifft eine Sicherheitseinrichtung mit einem Sensor, der polarisiertes Licht emittiert. Die Hand einer Bedienperson ist mit einem Material ummantelt, das die Polarisation des einfallenden Lichts des Sensors ändert.

Die CA 2 334 772 A1 betrifft eine Sicherheitseinrichtung gemäß dem Oberbegriff des Anspruchs 1, bei welcher eine Bedienperson einen Funksender an einem Armband trägt. Der Funksender emittiert zwei Frequenzen. Wird eine erste Frequenz des Funksenders empfangen, wird eine Maschine gestartet. Bei Empfang der zweiten Frequenz wird die Maschine gestoppt.

In der DE 10 2007 004 233 A1 ist ein Verfahren zur Erhöhung der Personensicherheit an einer Maschine beschrieben. Bei diesem Verfahren wird eine Prüfvorrichtung vorgesehen. Mittels dieser wird die Maschine deaktiviert, wenn eine Person mit einem Funkchip in der Sicherheitszone der Maschine vorhanden ist.

Der Erfindung liegt die Aufgabe zugrunde, ein Sicherheitssystem bereitzustellen, welches einerseits hohen Sicherheitsanforderungen entspricht und andererseits eine hohe Verfügbarkeit des mit dem Sicherheitssystem überwachten Systems gewährleistet.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft ein Sicherheitssystem mit wenigstens einem Sicherheitssensor zur Erfassung von Objekten in einem Überwachungsbereich, welcher einen Gefahrenbereich an einer Maschine oder Anlage bildet, wobei sicherheitskritische Objekte Erkennungsreferenzen aufweisen. Diese Erkennungsreferenzen sind mit dem Sicherheitssensor erfassbar, wodurch sicherheitskritische Objekte von nichtsicherheitskritischen Objekten unterscheidbar sind. Nur bei Eindringen eines sicherheitskritischen Objekts in den Überwachungsbereich während des Betriebs des Sicherheitssensors generiert der Sicherheitssensor ein Ausgangssignal, welches ein Abschalten der Maschine oder Anlage bewirkt. Die Erkennungsreferenzen bilden aktive Referenzen, welche kodierte Signale, die mit dem Sicherheitssensor empfangbar sind, aussenden. Vor der Inbetriebnahme des Sicherheitssensors wird das Vorhandensein und die korrekte Beschaffenheit der oder jeder Erkennungsreferenz überprüft, in dem die die sicherheitskritischen Objekte kennzeichnenden Erkennungsreferenzen in den Eingriffsbereich des Sicherheitssensors gebracht werden.

Durch die den sicherheitskritischen Objekten zugeordneten Erkennungsreferenzen, welche vom Sicherheitssensor des erfindungsgemäßen Sicherheitssystems eindeutig erkannt werden können, können diese sicherheitskritischen Objekte von nichtsicherheitskritischen Objekten sicher unterschieden werden. Insbesondere können durch das Vorsehen der Erkennungsreferenzen als sicherheitskritische Objekte Personen oder Personenteile wie Hände oder Finger sicher erkannt werden und zwar für beliebig gestaltete Umgebungsbedingungen, wie verschiedene, gegebenenfalls zeitlich variierende Hintergrundszenarien als nichtsicherheitskritische Objekte.

Besonders vorteilhaft kann das erfindungsgemäße Sicherheitssystem zur Absicherung von Zugriffs- und Zugriffsgefahrenstellen an Maschinen wie Abkantpressen eingesetzt werden.

Ein wesentlicher Vorteil des erfindungsgemäßen Sicherheitssystems besteht dabei darin, dass zwei im Prinzip gegenläufige, sich üblicherweise teilweise sogar ausschließende Forderungen an ein Überwachungssystem für den Bereich des Personenschutzes, zugleich erfüllt werden können. Mit dem erfindungsgemäßen Sicherheitssystem wird nämlich einerseits das wesentliche Sicherheitskriterium, sicherheitskritische Objekte unter allen auftretenden Umgebungs- und Randbedingungen sicher zu erkennen, erfüllt, indem die sicherheitskritischen Objekte mit den Erkennungsreferenzen versehen sind. So ist gewährleistet, dass jedes in den Überwachungsbereich eindringende sicherheitskritische Objekt erkannt werden kann, so dass dann, zur Vermeidung von Gefährdungen, eine mit den Sicherheitssystemen überwachte Maschine oder Anlage abgeschaltet werden kann. Andererseits kann damit zugleich das ebenfalls wesentliche Verfügbarkeitskriterium erfüllt werden, da durch die selektive Detektion der Erkennungsreferenzen an den sicherheitskritischen Objekten mit hoher Sicherheit ausgeschlossen ist, dass mit den Sicherheitssensoren fälschlicherweise ein nichtsicherheitskritisches Objekt als sicherheitskritisches Objekt erkannt wird und so ein unnötiges Abschalten oder Stillsetzen der überwachten Maschine oder Anlage zu vermieden wird.

Erfindungsgemäß bildet die Erkennungsreferenz eine aktive Referenz, welche Signale generiert, die mit dem Sicherheitssensor empfangbar sind.

Beispielsweise kann dabei die Erkennungsreferenz, die an einem sicherheitskritischen Objekt angebracht ist, von einem Transponder, einem Funksender, einem optischen Sendeelement oder von einer Mehrfachanordnung dieser Elemente gebildet sein. Auch eine Kombination dieser Elemente ist möglich, wobei dann der Sicherheitssensor entsprechend ausgebildet ist, um die Kombination der von den Elementen generierten Signale empfangen zu können.

Da in diesen Fällen die Erkennungsreferenzen aktiv Signale generieren, muss der zugeordnete Sicherheitssensor lediglich geeignete Empfangssysteme zum Empfang dieser Signale aufweisen, um die entsprechenden Erkennungsreferenzen und damit die zugeordneten sicherheitskritischen Objekte zu erkennen.

Generell können dabei Erkennungsreferenzen kodierte Signale aussenden, so dass durch Empfang dieser Signale im Sicherheitssensor verschiedene sicherheitskritische Objekte, die mit unterschiedlichen Erkennungsreferenzen gekennzeichnet sind, voneinander unterschieden werden können. Damit ist allgemein eine Klassifikation von sicherheitskritischen Objekten möglich.

Zusätzlich kann als Erkennungsreferenz eine passive Referenz vorgesehen sein, von welcher vom Sicherheitssensor ausgesandte Signale in charakteristischer Weise zum Sicherheitssensor zugeführt sind.

Insbesondere können die Erkennungsreferenzen ein charakteristisches Reflexionsverhalten für vom Sicherheitssensor emittierte Lichtstrahlen aufweisen.

Hierzu können die Erkennungsreferenzen ein bestimmtes Kontrastmuster oder Farbmuster aufweisen, welches vom Sicherheitssensor dadurch detektiert wird, dass vom Sicherheitssensor emittierte Lichtstrahlen dieses Muster abtasten.

Weiterhin können die Erkennungsreferenzen wenigstens ein retroreflektierendes Element aufweisen.

In diesem Fall emittiert der Sicherheitssensor Lichtstrahlen, bevorzugt mit einer speziellen optischen Wellenlänge. Diese Lichtstrahlen werden dann vom retroreflektierenden Element viel stärker als von anderen Objekten, insbesondere von einem Hintergrund, zum Sicherheitssensor zurückreflektiert, wodurch die das sicherheitskritische Objekt kennzeichnende Erkennungsreferenz in Form des retroreflektierenden Elements von allen anderen Objekten sicher unterschieden werden kann.

Weiterhin können vom Sicherheitssensor emittierte und an der Erkennungsreferenz reflektierte Lichtstrahlen eine bestimmte, im Sicherheitssensor analysierbare spektrale Verteilung aufweisen.

In diesem Fall kann eine Erkennungsreferenz und damit ein sicherheitskritisches Objekt durch eine im Sicherheitssensor durchgeführte Spektralanalyse sicher von anderen, nichtsicherheitskritischen Objekten unterschieden werden. Zur Durchführung der Spektralanalyse umfasst der Sicherheitssensor bevorzugt einen oder mehrere Sender, die Lichtstrahlen in einem durchstimmbaren Wellenlängenbereich emittieren, und/oder einen oder mehrere Empfänger mit einem durchstimmbaren Wellenlängenbereich.

Weiterhin kann die ein sicherheitskritisches Objekt kennzeichnende Erkennungsreferenz von einem fluoreszierenden Element gebildet sein. In diesem Fall wird ein sicherheitskritisches Objekt von einem nichtsicherheitskritischen Objekt unterschieden, indem eine selektive Detektion der Erkennungsreferenz mit dem Sicherheitssensor derart erfolgt, dass der Sicherheitssensor Lichtstrahlen mit einer bestimmten Wellenlänge emittiert und die Erkennungsreferenz in Form des fluoreszierenden Elements die Lichtstrahlen in einer anderen Wellenlänge zum Sicherheitssensor zurückreflektiert.

Schließlich kann die ein sicherheitskritisches Objekt kennzeichnende Erkennungsreferenz von einem phosphoreszierenden Element gebildet sein. In diesem Fall wird ein sicherheitskritisches Objekt von einem nichtsicherheitskritischen Objekt unterschieden, indem eine selektive Detektion der Erkennungsreferenz mit dem Sicherheitssensor derart erfolgt, dass die Lichtstrahlen, die vom Sicherheitssensor emittiert werden, vom phosphoreszierenden Element zeitverzögert emittiert werden und dementsprechend zeitverzögert zum Sicherheitssensor reflektiert werden.

Generell kann auch eine Kombination dieser passiven Erkennungsreferenzen zum Einsatz kommen, wobei dann der Sicherheitssensor entsprechend ausgebildet ist, um diese verschiedenen Erkennungsreferenzen erfassen zu können.

Um zu gewährleisten, dass während des Betriebs des Sicherheitssystems der Sicherheitssensor seine Sicherheitsfunktion erfüllt, das heißt fehlerfrei sicherheitskritische Objekte von nichtsicherheitskritischen Objekten innerhalb des Überwachungsbereichs unterscheidet, ist erfindungsgemäß vorgesehen, dass vor Inbetriebnahme des Sicherheitssystems das Vorhandensein und die korrekte Beschaffenheit der die sicherheitskritischen Objekte kennzeichnenden Erkennungsreferenzen überprüft wird. Zweckmäßigerweise werden dabei die die sicherheitskritischen Objekte kennzeichnenden Erkennungsreferenzen in den Eingriffsbereich des Sicherheitssensors gebracht, damit diese vom Sicherheitssensor erfasst werden können. Entsprechendes gilt für ein Sicherheitssystem mit einer Mehrfachanordnung von Sicherheitssensoren.

Die Erfindung wird im Folgenden anhand der Zeichnungen erläutert. Es zeigen:
- Figur 1:: Schematische Darstellung eines Sicherheitssystems mit einem Sicherheitssensor zur Absicherung einer Abkantpresse.
- Figur 2:: Draufsicht auf die Abkantpresse mit dem Sicherheitssensor gemäß Figur 1.
- Figur 3:: Schematische Darstellung eines Ausführungsbeispiels eines Sicherheitssensors gemäß den Figuren 1 und 2.

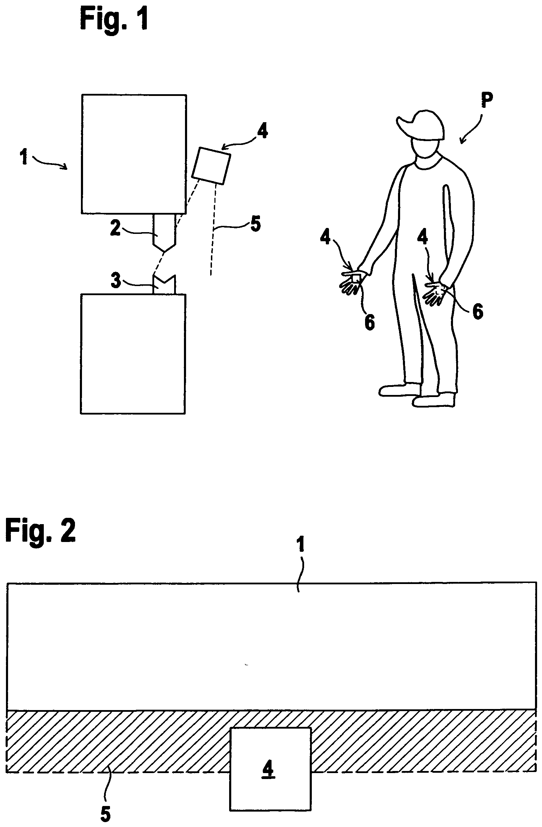

In den Figuren 1 und 2 ist ein Ausführungsbeispiel einer als Abkantpresse 1 ausgebildeten Maschine dargestellt, welche zur Vermeidung von Gefährdungen einer Bedienperson P überwacht werden muss.

Die Abkantpresse 1 dient zum Biegen und Formen von nicht dargestellten Werkstücken, insbesondere von Blechteilen. Die Bearbeitung eines Werkstücks erfolgt jeweils mittels eines Oberwerkzeugs 2 und eines mit diesem zusammenwirkenden Unterwerkzeugs 3. Bei einer Pressbewegung werden das Oberwerkzeug 2 und Unterwerkzeug 3 gegeneinander geführt, so dass ein dazwischen liegendes Werkstück entlang einer Biegelinie abgekantet oder gebogen wird.

Zur Bearbeitung der Werkstücke werden diese üblicherweise von Bedienpersonen P in vorgegebenen Positionen zwischen Ober- 2 und Unterwerkzeug 3 eingebracht. Dadurch besteht für die jeweilige Bedienperson P die Gefahr von schwerwiegenden Verletzungen, insbesondere durch Einbringen der Hände oder Finger in den Bereich zwischen Ober- 2 und Unterwerkzeug 3.

Zur Absicherung des Gefahrenbereichs zwischen Oberwerkzeug 2 und Unterwerkzeug 3 ist ein Sicherheitssystem vorgesehen, welches im vorliegenden Fall einen Sicherheitssensor 4 aufweist. Generell kann auch eine Anordnung mehrere Sicherheitssensoren 4 vorgesehen sein. Mit dem Sicherheitssensor 4 wird ein Überwachungsbereich 5 überwacht, der den Gefahrenbereich mit dem Zwischenraum zwischen Oberwerkzeug 2 und Unterwerkzeug 3 umfasst.

Die Funktionsweise des Sicherheitssensors 4 ist derart, dass mit diesem innerhalb des Überwachungsbereichs 5 vorhandene Objekte dahingehend unterschieden werden, ob es sich hierbei um sicherheitskritische Objekte oder nichtsicherheitskritische Objekte handelt. Im vorliegenden Fall wird mit dem Sicherheitssystem ein Zugriffs- oder Zugriffsgefahrenschutz realisiert, der ein Eindringen in den Überwachungsbereich 5 von Händen oder Fingern einer Bedienperson P als gefahrbringenden Eingriff erkennen soll. Bei Erkennen eines solchen gefahrbringenden Eingriffs generiert der Sicherheitssensor 4 ein Schaltsignal mit einem definierten Schaltzustand, welches einen Abschaltbefehl für die Abkantpresse 1 bildet. Durch dieses Abschalten der Abkantpresse 1 wird eine Gefährdung der Bedienperson P ausgeschlossen, das heißt die Sicherheitsfunktion des Sicherheitssystems ist erfüllt.

Wird dagegen mit dem Sicherheitssensor 4 ein nichtsicherheitskritisches Objekt im Überwachungsbereich 5 erkannt, generiert der Sicherheitssensor 4 keinen Abschaltbefehl für die Abkantpresse 1, das heißt die Abkantpresse 1 arbeitet weiter. Derartige nichtsicherheitskritische Objekte sind insbesondere von den Maschinenteilen der Abkantpresse 1 selbst oder von den Werkstücken, die mit der Abkantpresse 1 bearbeitet werden, gebildet. Die Detektion dieser nichtsicherheitskritischen Objekte entspricht keiner Gefahrensituation, das heißt ein Abschalten der Abkantpresse 1 bei deren Detektion würde zu einem unnötigen Maschinenstillstand führen. Durch die sichere Unterscheidung von sicherheitskritischen Objekten und nichtsicherheitskritischen Objekten mittels des sicherheitskritischen Objekts wird somit nicht nur das notwendige Sicherheitskriterium erfüllt, sondern auch das Verfügbarkeitskriterium, demzufolge nur sicherheitskritische Objekte, nicht aber nichtsicherheitskritische Objekte einen Maschinenstillstand verursachen dürften.

Die sicherheitskritischen Objekte, im vorliegenden Fall die Hände der Bedienperson P, sind, damit diese sicher von nichtsicherheitskritischen Objekten unterschieden werden, mit jeweils einer Erkennungsreferenz 6 gekennzeichnet. Im vorliegenden Fall besteht die Erkennungsreferenz 6 aus einem fluoreszierenden Element derart, dass die Oberflächen von Handschuhen 7, die die Bedienperson P bei der Bedienung der Abkantpresse 1 tragen muss, teilweise oder besonders vorteilhaft vollständig aus fluoreszierendem Material bestehen.

Der Sicherheitssensor 4 ist so ausgebildet, dass mit diesem die Erkennungsreferenz 6 detektiert werden kann, so dass die mit den Erkennungsreferenzen 6 gekennzeichneten sicherheitskritischen Objekte sicher von nichtsicherheitskritischen Objekten unterschieden werden können.

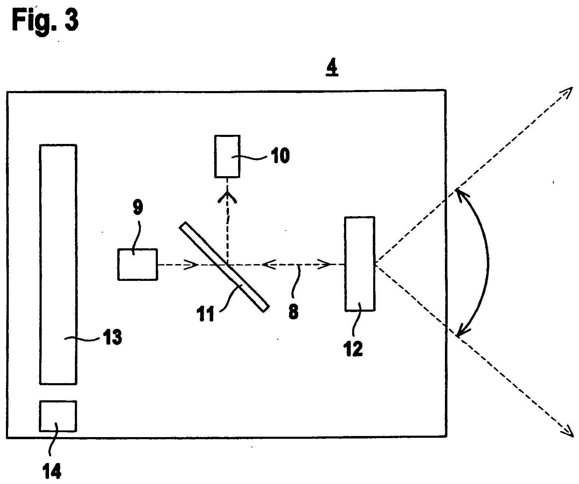

Figur 3 zeigt beispielhaft den Aufbau eines solchen Sicherheitssensors. Der Sicherheitssensor ist als optischer Sensor ausgebildet, der einen Lichtstrahlen 8 emittierenden Sender 9 und einen Lichtstrahlen 8 empfangenden Empfänger 10 aufweist. Dem Sender 9 und Empfänger 10 sind ein Strahlteiler 11 und eine Ablenkeinheit 12 nachgeordnet. Durch den Strahlteiler 11 wird ein koaxialer Strahlverlauf der in dem Überwachungsbereich 5 geführten und der aus dem Überwachungsbereich 5 zurück zum Sicherheitssensor 4 geführten Lichtstrahlen 8 erzielt. Die Ablenkeinheit 12 kann von einem in zwei Raumrichtungen ablenkbaren Schwingspiegel gebildet sein. Durch diese Ablenkeinheit 12 werden die vom Sender 9 emittierten Lichtstrahlen 8 innerhalb eines räumlichen Überwachungsbereichs 5 geführt.

Der Sender 9 weist weiterhin eine Auswerteeinheit 13 auf. Die Auswerteeinheit 13 dient einerseits zum Ansteuern des Senders 9. Andererseits werden in der Auswerteeinheit 13 die Empfangssignale am Ausgang des Empfängers 10 ausgewertet, wodurch in der Auswerteeinheit 13 das Schaltsignal zur Ansteuerung der Abkantpresse 1 generiert wird. Das Schaltsignal weist zwei Schaltzustände auf, welche angeben, ob sich ein sicherheitskritisches Objekt im Überwachungsbereich 5 befindet oder nicht. Das Schaltsignal wird über einen Schaltausgang 14 an die Steuerung der Abkantpresse 1 ausgegeben.

Für den Einsatz im Personenschutz weist die Auswerteeinheit 13 einen fehlersicheren Aufbau auf. Bevorzugt besteht hierzu die Auswerteeinheit 13 aus zwei sich zyklisch überwachenden Rechnereinheiten.

Um die Erkennungsreferenz 6 sicher erkennen zu können, emittiert der Sender 9 Lichtstrahlen 8 mit einer bestimmten, auf das fluoreszierende Material der Erkennungsreferenzen 6 abgestimmten Wellenlänge. Das fluoreszierende Material reflektiert die Lichtstrahlen 8 in einer anderen Wellenlänge zurück. Die spektrale Empfindlichkeit des Empfängers 10 ist an diese Wellenlänge angepasst, so dass diese Wellenlängen selektiv vom Empfänger 10 detektiert werden kann. Damit kann die Erkennungsreferenz 6 und damit das sicherheitskritische Objekt von anderen, nichtsicherheitskritischen Objekten, welche die Lichtstrahlen 8 mit unveränderter Wellenlänge reflektieren, sicher unterschieden werden.

Zur Unterdrückung von Fremdlicht und Gleichlicht, das auf den Sicherheitssensor 4 trifft, emittiert der Sender 9 bevorzugt Lichtstrahlen 8, die mit einer bestimmten Modulationsfrequenz moduliert sind.

Fremdlicht und Gleichlichteinflüsse können weiterhin dadurch eliminiert beziehungsweise reduziert werden, dass der Sender 9 zyklisch aktiviert und deaktiviert wird. Dann wird in der Auswerteeinheit für jede durchgeführte Messung die Differenz der Empfangssignale bei aktiviertem und deaktiviertem Sender 9 gebildet.

Um eine sichere Erkennung der sicherheitskritischen Objekte während des Betriebs des Sicherheitssystems zu gewährleisten, wird vor Inbetriebnahme des Sicherheitssystems mit dem Sicherheitssensor 4 das Vorhandensein und die korrekte Beschaffenheit des oder der sicherheitskritischen Objekte geprüft. Hierzu wird das oder jedes Sicherheitssystem mit dem Sicherheitssensor 4 vorab detektiert. Im anschließenden Betrieb des Sicherheitssystems wird mit dem Sicherheitssensor 4 das oder jedes sicherheitskritische Objekt verfolgt. Hierbei kann beispielsweise mit dem Sicherheitssensor 4 eine Objekterfassung in einem Erfassungsbereich erfolgen, der größer ist als der Überwachungsbereich 5. Der Überwachungsbereich 5 bildet dann einen definierten Teilbereich des Erfassungsbereichs. Sobald ein Eindringen des sicherheitskritischen Objekts in den Überwachungsbereich 5 während des Betriebs des Sicherheitssystems mit den Sicherheitssensoren 4 festgestellt wird, wird mit dem Sicherheitssensor 4 ein Abschaltbefehl für die Abkantpresse 1 generiert.

Das Sicherheitssystem gemäß den Figuren 1 und 2 kann gemäß einer ersten Variante derart abgewandelt sein, dass die Erkennungsreferenzen 6 der sicherheitskritischen Objekte jeweils von einem phosphoreszierenden Element gebildet sind. Der Sicherheitssensor 4 kann wieder den Aufbau gemäß Figur 3 aufweisen. Die Erkennungsreferenz 6 wird in diesem Fall dadurch erkannt, dass die vom Sender 9 des Sicherheitssensors 4 emittierten Lichtstrahlen 8 an dem phosphoreszierenden Element zeitlich verzögert reflektiert werden.

Das Sicherheitssystem gemäß den Figuren 1 und 2 kann gemäß einer zweiten Variante dahingehend abgewandelt sein, dass die Erkennungsreferenz 6 der sicherheitskritischen Objekte jeweils von einem retroreflektierenden Element gebildet sind. Auch hier kann der Sicherheitssensor 4 wieder den Aufbau gemäß Figur 3 aufweisen. Die Erkennungsreferenz 6 in Form des retroreflektierenden Elements wird dadurch erkannt, dass vom Sender 9 emittierte Lichtstrahlen 8 einer bestimmten Wellenlänge an dem retroreflektierenden Element erheblich stärker reflektiert werden als vom nichtsicherheitskritischen Objekten, die keine retroreflektierenden Oberflächen aufweisen.

Generell können die Erkennungsreferenzen 6 auch spezifische, individuelle Kontrastmuster oder Farbmuster aufweisen, die mit dem Sicherheitssensor 4 erkannt werden.

Insbesondere kann der Sicherheitssensor 4 so ausgebildet sein, dass die Erkennungsreferenzen 6 mittels einer Spektralanalyse detektiert werden. Hierzu kann der Sicherheitssensor 4 Lichtstrahlen 8 mit unterschiedlichen Wellenlängen emittieren. Alternativ oder zusätzlich weist der Sicherheitssensor 4 einen Empfänger 10 mit durchstimmbarem Wellenlängenbereich auf.

Generell sind bei den genannten Ausführungsformen des Sicherheitssystems die Erkennungsreferenzen 6 als passive Referenzen ausgebildet.

Alternativ oder zusätzlich können auch Erkennungsreferenzen 6 eingesetzt werden, die aktive Referenzen bilden.

Beispiele hierfür sind lichtemittierende Sendeelemente oder Funksignale emittierende Funksender, die in die Handschuhe 7 der Bedienperson P als Erkennungsreferenz 6 eingearbeitet werden. Der Sicherheitssensor 4 weist dann hierfür geeignete optische Empfangssysteme oder Funkempfänger auf.

Schließlich können als Erkennungsreferenzen 6 auch Transponder vorgesehen sein. Der Sicherheitssensor 4 weist dann ein Schreib-/Lesegerät auf, das auf induktivem Weg die Transponder abfragt, worauf diese aktiv Antwortsignale an das Schreib-/Lesegerät senden.

### Bezugszeichenliste

- (1): Abkantpresse
- (2): Oberwerkzeug
- (3): Unterwerkzeug
- (4): Sicherheitssensor
- (5): Überwachungsbereich
- (6): Erkennungsreferenz
- (7): Handschuh
- (8): Lichtstrahlen
- (9): Sender
- (10): Empfänger
- (11): Strahlteiler
- (12): Ablenkeinheit
- (13): Auswerteeinheit
- (14): Schaltausgang

- P: Bedienperson

## Patentansprüche

1. Sicherheitssystem mit wenigstens einem Sicherheitssensor (4) zur Erfassung von Objekten in einem Überwachungsbereich, welcher einen Gefahrenbereich an einer Maschine oder Anlage bildet, wobei sicherheitskritische Objekte Erkennungsreferenzen (6) aufweisen, welche mit dem Sicherheitssensor (4) erfassbar sind, wodurch sicherheitskritische Objekte von nichtsicherheitskritischen Objekten unterscheidbar sind, und wobei nur bei Eindringen eines sicherheitskritischen Objekts in den Überwachungsbereich während des Betriebs des Sicherheitssensors dieser ein Ausgangssignal generiert, welches ein Abschalten der Maschine oder Anlage bewirkt, wobei die Erkennungsreferenzen (6) aktive Referenzen bilden, welche kodierte Signale, die mit dem Sicherheitssensor (4) empfangbar sind, aussenden, **dadurch gekennzeichnet, dass** vor der Inbetriebnahme des Sicherheitssystems das Vorhandensein und die korrekte Beschaffenheit der oder jeder Erkennungsreferenz (6) überprüft wird, in dem die die sicherheitskritischen Objekte kennzeichnenden Erkennungsreferenzen in den Eingriffsbereich des Sicherheitssensors (4) gebracht werden.

2. Sicherheitssystem nach Anspruch 1, **dadurch gekennzeichnet, dass** die Erkennungsreferenz (6) von einem Transponder gebildet ist.

3. Sicherheitssystem nach einem der Ansprüche 1 oder 2, **dadurch gekennzeichnet, dass** die oder jede Erkennungsreferenz (6) wenigstens einen Funksender aufweist.

4. Sicherheitssystem nach einem der Ansprüche 1 bis 3, **dadurch gekennzeichnet, dass** die oder jede Erkennungsreferenz (6) wenigstens ein optisches Sendeelement aufweist.

5. Sicherheitssystem nach einem der Ansprüche 1 bis 5, **dadurch gekennzeichnet, dass** zusätzlich eine Erkennungsreferenz (6), die eine passive Referenz bildet, vorgesehen ist, von welcher vom Sicherheitssensor (4) ausgesandte Signale in charakteristischer Weise zum Sicherheitssensor (4) zugeführt sind.

6. Sicherheitssystem nach Anspruch 5, **dadurch gekennzeichnet, dass** die Erkennungsreferenzen (6) ein charakteristisches Reflexionsverhalten für vom Sicherheitssensor (4) emittierte Lichtstrahlen (8) aufweisen.

7. Sicherheitssystem nach einem der Ansprüche 5 oder 6, **dadurch gekennzeichnet, dass** die Erkennungsreferenzen (6) wenigstens ein retroreflektierendes Element aufweisen.

8. Sicherheitssystem nach einem der Ansprüche 5 bis 7, **dadurch gekennzeichnet, dass** vom Sicherheitssensor (4) emittierte und an der Erkennungsreferenz (6) reflektierte Lichtstrahlen (8) eine bestimmte, im Sicherheitssensor (4) analysierbare spektrale Verteilung aufweisen.

9. Sicherheitssystem nach Anspruch 8, **dadurch gekennzeichnet, dass** die Erkennungsreferenz (6) wenigstens ein fluoreszierendes Element aufweist.

10. Sicherheitssystem nach Anspruch 8, **dadurch gekennzeichnet, dass** die Erkennungsreferenz (6) wenigstens ein phosphoreszierendes Element aufweist.

11. Sicherheitssystem nach einem der Ansprüche 6 bis 10, **dadurch gekennzeichnet, dass** der Sicherheitssensor (4) einen optischen Sensor mit wenigstens einem Lichtstrahlen (8) emittierenden Sender (9), wenigstens einem Lichtstrahlen (8) empfangenden Empfänger (10) und einer Auswerteeinheit (13) bildet.

12. Sicherheitssystem nach Anspruch 11, **dadurch gekennzeichnet, dass** der Sender (9) modulierte Lichtstrahlen (8) emittiert.

13. Sicherheitssystem nach einem der Ansprüche 11 oder 12, **dadurch gekennzeichnet, dass** in der Auswerteeinheit (13) die Differenz der Empfangssignale des Empfängers (10), die bei aktiviertem und inaktiviertem Sender (9) erhalten werden, ausgewertet wird.

## Claims

1. Safety system with at least one safety sensor (4) for detecting objects in a monitoring region which defines a risk region at a machine or plant, wherein safety-critical objects have recognition references (6) detectable by the safety sensor (4), whereby safety-critical objects are distinguishable from non-safety-critical objects, and wherein the safety sensor generates an output signal, which causes switching-off of the machine or plant, only when a safety-critical object penetrates the monitoring region during operation of the safety sensor, wherein the recognition references (6) form active references which transmit coded signals receivable by the safety sensor (4), **characterised in that** prior to placing the safety system in operation the presence and correct nature of the or each recognition reference (6) is checked **in that** the recognition references characterising the safety-critical objects are brought into the range of action of the safety sensor (4).

2. Safety system according to claim 1, **characterised in that** the recognition reference (6) is formed by a transponder.

3. Safety system according to one of claims 1 and 2, **characterised in that** the or each recognition reference (6) comprises at least one radio transmitter.

4. Safety system according to any one of claims 1 to 3, **characterised in that** the or each recognition reference (6) comprises at least one optical transmitting element.

5. Safety system according to any one of claims 1 to 5, **characterised in that** in addition a recognition reference (6) is provided, which forms a passive reference and by which signals transmitted from the safety sensor (4) are fed in characteristic manner to the safety sensor (4).

6. Safety system according to claim 5, **characterised in that** the recognition references (6) have a characteristic reflection behaviour for light beams (8) emitted by the safety sensor (4).

7. Safety system according to one of claims 5 and 6, **characterised in that** the recognition references (6) comprise at least one retroreflective element.

8. Safety system according to any one of claims 5 to 7, **characterised in that** light beams (8) emitted by the safety sensor (4) and reflected to the recognition reference (6) have a specific spectral distribution able to be analysed in the safety sensor (4).

9. Safety system according to claim 8, **characterised in that** the recognition reference (6) comprises at least one fluorescent element.

10. Safety system according to claim 8, **characterised in that** the recognition reference (6) comprises at least one phosphorescent element.

11. Safety system according to any one of claims 6 to 10, **characterised in that** the safety sensor (4) forms an optical sensor with at least one transmitter (9) emitting light beams (8), at least one receiver (10) receiving light beams (8) and an evaluating unit (13).

12. Safety system according to claim 11, **characterised in that** the transmitter (9) emits modulated light beams (8).

13. Safety system according to one of claims 11 and 12, **characterised in that** the difference of the received signals of the receiver (10) received when the transmitter (9) is active and inactive is evaluated in the evaluating unit (13).

## Revendications

1. Système de sécurité comprenant au moins un capteur de sécurité (4) pour détecter des objets dans une zone de surveillance qui constitue une zone de danger sur une machine ou une installation, dans lequel des objets critiques pour la sécurité présentent des références de reconnaissance (6) qui peuvent être détectées avec le capteur de sécurité (4), au moyen desquelles des objets critiques pour la sécurité peuvent être distingués d'objets non critiques pour la sécurité, et dans lequel le capteur de sécurité ne génère un signal de sortie qui provoque un arrêt de la machine ou de l'installation qu'en cas de pénétration d'un objet critique pour la sécurité dans la zone de surveillance pendant son fonctionnement, les références de reconnaissance (6) formant des références actives qui émettent des signaux codés qui peuvent être reçus par le capteur de sécurité (4),
**caractérisé en ce qu'**avant la mise en service du système de sécurité, on vérifie la présence et la nature correcte de la ou de chaque référence de reconnaissance (6) en amenant les références de reconnaissance caractérisant les objets critiques pour la sécurité dans la zone d'intervention du capteur de sécurité (4).

2. Système de sécurité selon la revendication 1, **caractérisé en ce que** la référence de reconnaissance (6) est formée par un transpondeur.

3. Système de sécurité selon l'une des revendications 1 ou 2, **caractérisé en ce que** la ou chaque référence de reconnaissance (6) présente au moins un émetteur radio.

4. Système de sécurité selon l'une des revendications 1 à 3, **caractérisé en ce que** la ou chaque référence de reconnaissance (6) présente au moins un élément d'émission optique.

5. Système de sécurité selon l'une des revendications 1 à 5, **caractérisé en ce qu'**il est prévu en plus une référence de reconnaissance (6) qui forme une référence passive par laquelle des signaux envoyés par le capteur de sécurité (4) sont amenés d'une manière caractéristique au capteur de sécurité (4).

6. Système de sécurité selon la revendication 5, **caractérisé en ce que** les références de reconnaissance (6) présentent un comportement de réflexion caractéristique pour les rayons lumineux (8) émis par le capteur de sécurité (4).

7. Système de sécurité selon l'une des revendications 5 ou 6, **caractérisé en ce que** les références de reconnaissance (6) présentent au moins un élément rétroréfléchissant.

8. Système de sécurité selon l'une des revendications 5 à 7, **caractérisé en ce que** les rayons lumineux (8) émis par le capteur de sécurité (4) et réfléchis sur la référence de reconnaissance (6) présentent une distribution spectrale déterminée, analysable dans le capteur de sécurité (4).

9. Système de sécurité selon la revendication 8, **caractérisé en ce que** la référence de reconnaissance (6) présente au moins un élément fluorescent.

10. Système de sécurité selon la revendication 8, **caractérisé en ce que** la référence de reconnaissance (6) présente au moins un élément phosphorescent.

11. Système de sécurité selon l'une des revendications 6 à 10, **caractérisé en ce que** le capteur de sécurité (4) forme un capteur optique comprenant au moins un émetteur (9) émettant des rayons lumineux (8), au moins un récepteur (10) recevant des rayons lumineux (8) et une unité d'évaluation (13).

12. Système de sécurité selon la revendication 11, **caractérisé en ce que** l'émetteur (9) émet des rayons lumineux (8) modulés.

13. Système de sécurité selon l'une des revendications 11 ou 12, **caractérisé en ce que** la différence entre les signaux de réception du récepteur (10) qui sont reçus avec l'émetteur (9) activé et non activé est évaluée dans l'unité d'évaluation (13).
